(19) Europäisches Patentamt
European Patent Office
Office européen des brevets

(11) Publication number: **0 672 722 A2**

# (12) EUROPEAN PATENT APPLICATION

(21) Application number: **95201490.0**

(22) Date of filing: **07.11.89**

(51) Int. Cl.[6]: **C08L 71/12**, C08L 81/02, C08L 77/00

This application was filed on 06 - 06 - 1995 as a divisional application to the application mentioned under INID code 60.

(30) Priority: **08.11.88 JP 280340/88**
**23.02.89 JP 41649/89**
**27.02.89 JP 43200/89**
**28.02.89 JP 45489/89**
**10.05.89 JP 115173/89**
**24.05.89 JP 128943/89**
**24.07.89 JP 188883/89**
**31.07.89 JP 198726/89**
**10.08.89 JP 205620/89**

(43) Date of publication of application:
**20.09.95 Bulletin 95/38**

(60) Publication number of the earlier application in accordance with Art.76 EPC: **0 368 413**

(84) Designated Contracting States:
**BE DE ES FR GB IT NL**

(71) Applicant: **GE PLASTICS JAPAN LTD.**
**Itohpia Nihonbashi-Honcho Building**
**2-7-1 Nihonbashi-Honcho**
**Chuo-ku**
**Tokyo 103 (JP)**

(72) Inventor: **Inoue, Kazunari**
**516-3 Kamimita-cho**
**Utsunomiya City,**
**Tochigi Prefecture (JP)**
Inventor: **Saito, Akihiro**
**3413-84 Ishiimachi**
**Utsunomiya City,**
**Tochigi Prefecture (JP)**
Inventor: **Morioka, Masataka**
**13-7 Daimachi**
**Moka City Tochigi Prefecture (JP)**

(74) Representative: **Smulders, Theodorus A.H.J., Ir. et al**
**Vereenigde Octrooibureaux**
**Nieuwe Parklaan 97**
**NL-2587 BN 's-Gravenhage (NL)**

(54) **Polyphenylene sulfide resin composition.**

(57) A resin composition comprising polyphenylene sulfide, polyamide, and a modified polyphenylene ether, whereby impact resistance of a molded article produced from the resin composition is improved.

EP 0 672 722 A2

## Field of the Invention

The present invention relates a polyphenylene sulfide resin composition, particularly such a resin composition having improved brittleness to impact and good appearance and heat resistance.

## Background of the Invention

Polyphenylene sulfide has good resistance to heat, flame and chemicals and high regidity, and is a very useful resin as an engineering plastic. However, it also has a drawback that it is weak to impact. Accordingly, there were proposed resin compositions in which excellent properties of polyphenylene sulfide are utilized or its drawbacks are improved.

For instance, Japanese Patent Application Laid-Open No. 156561/75 discloses a resin composition comprising polyphenylene ether and polyphenylene sulfide in which polyphenylene sulfide is added to improve moldability and fire-resistant of polyphenylene ether.

Japanese Patent Application Laid-Open No. 69255/78 discloses a polyphenylene sulfide resin composition containing polyphenylene sulfide and polyamide. This intends to improve brittleness of polyphenylene sulfide.

Further, Japanese Patent Application Laid-Open No. 213758/84 proposes a resin composition in which a polyamide resin and an epoxy resin are admixed to a blend of polyphenylene sulfide and polyphenylene ether in order to improve compatibility between polyphenylene sulfide and polyphenylene ether.

If polyphenylene ether and polyamide are blended to polyphenylene sulfide to improve brittleness of polyphenylene sulfide, the resin composition obtained by simple mixing is brittle and has poor appearance, because polyphenylene sulfide and polyphenylene ether are less compatible with each other. When polyamide is admixed to polyphenylene sulfide, compatibility between polyphenylene sulfide and polyamide is insufficient, so that improvement of brittleness of polyphenylene sulfide is insufficient and a new problem, delamination, is furthermore caused. In the case where compatibility between polyphenylene sulfide and polyphenylene ether is improved by addition of polyamide and an epoxy resin, chemical reaction of the epoxy resin with the polyamide and the polyphenylene sulfide takes place, which results in a problem of unstable melt flow properties.

## The Brief Description of the Invention

The purpose of the present invention is to provide a polyphenylene sulfide resin composition in which polyphenylene sulfide is sufficiently compatibilized with polyphenylene ether, whereby the aforesaid problems are solved.

The present inventors have now found that a molded product of a resin composition comprising polyphenylene sulfide and polyphenylene ether is excellently improved in impact resistance by blending particular compounds with the resin composition, blending polyamide and particular compounds, or previously subjecting polyphenylene ether to particular modification.

Thus, the present invention is a resin composition comprising a polyphenylene sulfide resin and a polyphenylene ether resin, characterized in that the resin composition contains:

(A) from 20 to 80 parts by weight of a polyphenylene sulfide resin and

(B) from 20 to 80 parts by weight of a combination of 10 to 90 percent by weight of a polyphenylene ether resin which Is wholly or partly modified to have at least one group selected from carboxyl, acid anhydride and epoxy groups and 10 to 90 percent by weight of a polyamide resin.

## Detailed Description of the Invention

The polyphenylene sulfide resin used in the invention (hereinafter referred to as PPS) contains preferably at least 70 mole % of a structural unit represented by the general formula:

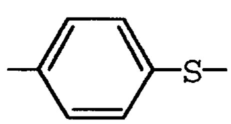

which then gives excellent properties to the composition. Methods of the polymerization for PPS include a method where p-dichlorobenzene is polymerized in the presence of sulfur and sodium carbonate, a method where polymerization is carried out in a polar solvent in the presence of sodium sulfide or sodium hydrosulfide and sodium hydroxide, or hydrogen sulfide and sodium hydroxide, a method where p-chlorothiophenol is self-condensed, and a preferred method where sodium sulfide is reacted with p-dichlorobenzene in an amide type solvent such as N-methyl pyrrolidone and dimethyl acetamide or a sulfone type solvent such as sulfolane. In these, it is preferred to add an alkali metal salt of carboxylic acid or sulfonic acid or alkali metal hydroxide in order to regulate a polymerization degree. As a copolymerized component,

a meta bond 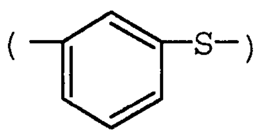 ,ortho bond 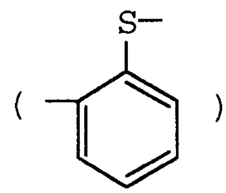 ,

ether bond 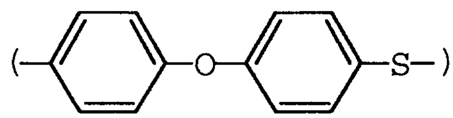 ,

sulfone bond 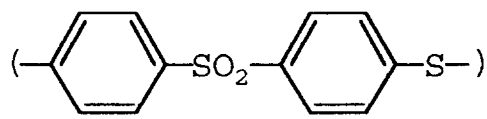 ,

biphenyl bond 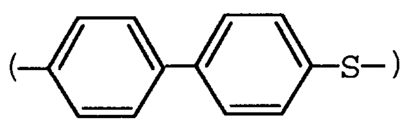 ,

substituted phenylsulfide bond 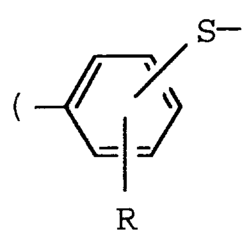 ,

wherein R represents alkyl, nitro, phenyl, alkoxy, carboxylic acid or its metal salt group) and trifunctional phenyl sulfide bond

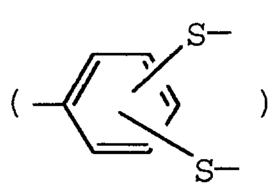

may be incorporated as far as crystallinity of the polymer is not greatly affected. However, the amount of the copolymerized components is preferrably 10 mole % at most. When tri- or more functional phenyl, biphenyl or naphthyl sulfide bond is particularly selected, 3 mole % or less is preferred with 1 mole % or less being more preferred.

Such PPS may be synthesized in a usual preparation process, such as (1) reaction of a hologen substituted aromatic compound with alkali sulfide (U.S. Patent 2,513,188, Japanese Patent Publications 27671/69 and 3368/70), (2) condensation reaction of thiophenols in the presence of alkali catalysts or

cupper salts (U.S. Patent 3,274,165, U.S. Patent 1,160,660) and (3) condensation reaction of aromatic compounds in the coexistence of sulfur chloride and a Lewis acid catalyst (Japanese Patent Publication 27255/71, Belgian Patent 29437). These may be selected depending upon purposes.

PPS is now commercially available from several companies. There are various grades having different crosslinking densities and viscosities. PPS having less cross-linked structure is preferred in the present invention.

Polyphenylene ether resin (hereinafter referred to as PPE) is a generic name of polymers represented by the general formula:

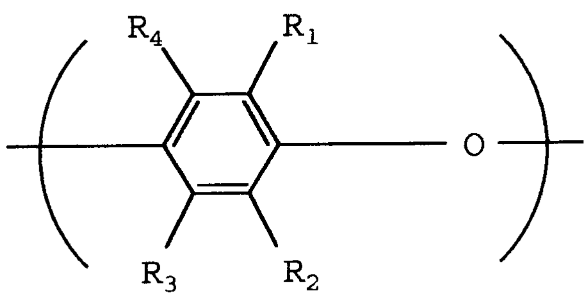

(A)

wherein R1, R2, R3 and R4 are a monovalent substituent selected from a hydrogen atom, a halogen atom, an alkyl group, an alkoxy group, a haloalkyl and haloalkoxy group in which at least 2 carbon atome are present between a halogen atom and a phenyl ring with the exclusion of those having tertiary $\alpha$-carbon atoms and n is an integer representing a degree of polymerization. The polymer may be a homopolymer or a copolymer of two or more comonomers represented by the above general formula. In preferred examples, R1 and R2 are an alkyl group of 1 to 4 carbon atoms, and R3 and R4 are a hydrogen atom or an alkyl group of 1 to 4 carbon atoms. For instance, there can be named poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether and poly(2-ethyl-6-propyl-1,4-phenylene)ether. A typical polyphenylene ether copolymer is a copolymer in which a part of the aforesaid polyphenylene ether recurring unit is replaced with tri-alkyl substituted phenol, such as 2,3,6-trimethylphenol. Further, styrene type compounds may be grafted on these polyphenylene ethers to yield copolymers. Examples of the styrene type compound-grafted polyphenylene ethers are copolymers grafted with styrene, $\alpha$-methylstyrene, vinyl toluene and chlorostyrene.

The polystyrene resin used in the present invention (hereinafter referred to as PS) is known per se and must contain at least 25% by weight, based on the polymer, of recurring units derived from vinyl compounds represented by the general formula:

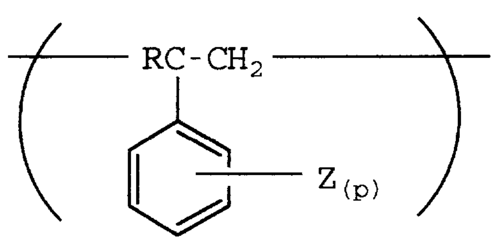

wherein R is a hydrogen atom or a $C_1$ - $C_4$ alkyl group, Z represents a substitutent halogen or $C_1$ - $C_4$ alkyl group, and p is an integer from zero to 5. Such styrene polymers include homopolymer of styrene or derivatives thereof; styrene polymers mixed or modified with natural or synthetic elastomers such as polybutadiene, polyisoprene, butyl rubber, EPDM, ethylene-propylene copolymers, natural rubber and epichlorohydrin; and styrene-containing copolymers such as styrene-acrylonitrile copolymers (SAN), styrene-butadiene copolymers, styrene-maleic anhydride copolymers and styrene-acrylonitrile-butadiene copolymers (ABS). Styrene polymers preferably used in the invention are a styrene homopolymer and rubber-reinforced polystyrene. A ratio of the mixed styrene resin to the polyphenylene ether resin is preferably in a range where excellent properties of the polyphenylene ether resin are not damaged. Accordingly, preferred is a ratio of 20 to 100 parts by weight of PPE to 0 to 80 parts by weight of PS.

The invention is characterized in that polyamide (hereinafter, PA) is used.

The polyamide used in the invention includes nylon-4, nylon-6, nylon-6,6, nylon-12 and nylon-6,10, but the invention should not be limited to only these. In the present invention, it is preferred to use polyamide in which the amount of a terminal amino group is higher than the amount of a terminal carboxyl group. Such polyamides may be obtained by adding an excessive amount of, for instance, compounds having a group reactive with a carboxylic group, such as diamines, to a polymerization system of the polyamide.

Alternatively, such polyamides may be obtained by reacting the polyamide with, for instance, compounds having a group reactive with a carboxylic group after polymerization of the polyamide. Preferably, the mole ratio of the terminal amino group to the terminal carboxyl group is at least 1.01, particularly 1.3, in the invention.

In the invention, the modified PPE and PA are used in a ratio of 10 to 90 wt. % of PPE to 90 to 10 wt. % PA, preferably 20 to 80 wt. %: 80 to 20 wt. %. If PPE is less than 10 wt. %, water absorption caused by PA adversely affects physical properties to lower heat resistance and rigidity. If PA is less than 10 wt. %, surface appearance is worse, and a drawback of PPS, brittleness, is not sufficiently improved.

The terminal of at least a part of PPE is preferably modified with at least one of epoxy, carboxyl and acid anhydride groups, particularly when component (a) is used.

Such terminal group modoficatlon of PPE with an epoxy, carboxyl or acid anhydride group can be conducted in any known methods.

Epoxidation of a terminal group is described, for instance, in Japanese Patent Application Laid-Open No. 125525/88. Terminal-epoxidated PPE may be obtained by bringing PPE into contact with a substance having epoxy group(s) under heating. Such a substance having epoxy group(s) is preferably an epoxy compound which has a halogen group at the other end or has two epoxy groups at both ends. Preferred compounds with one epoxy group at one end include epichlorohydrin and 2-methylepichlorohydrin. Preferred compounds with two epoxy groups at both ends include 2,2-bis(4-glycidylphenylether)propane, and epoxy resins. From the viewpoint of preventing PPE from blocking with each other, compounds with one epoxy group at one end are more preferred.

Modification of the terminal group with a carboxyl or acid anhydride group is described, for instance, in WO 87/07286. PPE with terminal carboxyl or acid anhydride group(s) may be obtained by reacting PPE with acid chloride having carboxyl or acid anhydride group(s), such as trimellitic anhydride chloride.

In the terminal-modified PPE, all of the terminal groups of PPE need not be modified. It is more preferred that PPE subjected to the terminal modification reaction is included in an amount of 70% by weight or less calculated on the total PPE.

In the resin composition according to the invention, it is preferred that PPS constitutes a continuous phase, in which PA is dispersed. Further, in the PA dispersion phase, PPE is dispersed. In most cases, the PA dispersion phase is in a relatively large irregular shape, in which usually plural, sometimes one, small PPE particles are contained. Such morphology was determined by etching a cross section of a molded article with formic acid which dissolves PA or methylene chloride which dissolves PPE, and observe it with a scanning electron microscope.

The aforesaid dispersion state of the polymers can easily be created by melt-kneading PPS, modified PPE and PA together with at least one compound selected from (b), (c) and (d) above. If the three polymers are simply kneaded without using such a compound, PA and PPE are separately dispersed in PPS with a size of PA of 1 $\mu$ or less and a size of PPE of several $\mu$. To compare the invention in which PPE microparticles are dispersed in PA, the difference in the dispersion state is remarkable.

In the invention, epoxy-modified PPE may be used, which is hereinbefore described. To explain it in further detail, it is described in WO 87/07286. It is PPE having an epoxide constituent represented by the formula:

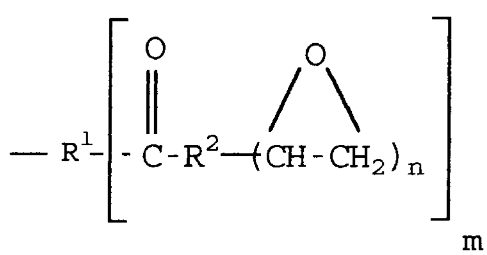

wherein m is 1 to 5, n is 1 to 10, and $R^1$ and $R^2$ are a binding group containing a hydrocarbon group, preferrably those represented by the formula:

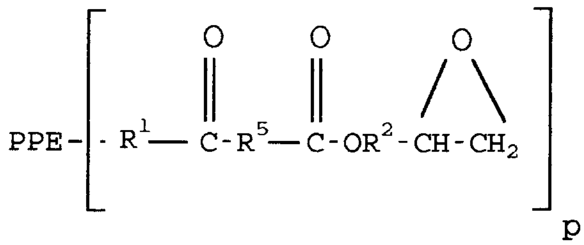

wherein p is 1 or 2, and $R^2$ and $R^5$ are a hydrocarbon group. However, the invention is not limited to these. Each PPE molecule preferrably has 1 or more epoxy groups, particularly 1 to 5 epoxy groups, on average. An epoxy content of $1 \times 10^{-3}$ to $1 \times 10^{-6}$ mole/g is particularly recommended. To introduce epoxy group(s) into PPE, there is known a method where acid-functionalized PPE is reacted with functionalized epoxide, such as epoxide having a hydroxyl group. The acid used in functionalizing PPE include maleic acid, fumaric acid, itaconic acid, citraconic acid, trimellitic acid, and derivatives thereof, such as acid anhydride and acid halide. The functionalized epoxide include glycidol, bisphenol A diglycidyl ether, glycidyl methacrylate polymer and epoxy novolak.

A part of PPE may be replaced with polystyrene as mentioned before.

PA used here is one in which the terminal amino group mole amount is larger than the terminal carboxyl group mole amount. Such PA is hereinbefore described. A part of PPE may be replaced with polystyrene as mentioned before.

All of the aforesaid compositions according to the invention may optionally contain a rubbery substance in an amount of 80 parts by weight or less, particularly 50 parts by weight or less, per 100 parts by weight of the total of PPS and PPE to further enhance impact resistance. When PA is contained, 20 parts by weight or less of a rubbery substance is preferably used per 100 parts by weight of the total of PPS and PPE.

The rubbery material includes natural or synthetic polymeric materials elastic at room temperature. Examples of such are natural rubber, butadiene polymer, styrene-isoprene copolymer, butadiene-styrene copolymer including random copolymer, block copolymer, graft copolymer and any other structures, isoprene polymer, chlorobutadiene polymer, butadiene-acrylonitrile copolymer, isobutylene polymer, isobutylene-butadiene copolymer, isobutylene-isoprene copolymer, acrylic ester polymer, ethylene-propyrene copolymer, ethylene-propylene-diene copolymer, Thiokol rubber, polysulfide rubber, polyurethane rubber, polyether rubber such as polypropylene oxide, and epichlorohydrin rubber.

These rubbery materials may be prepared by any known methods, such as emulsion polymerization or solution polymerization, using any known catalysts such as peroxides, trialkyl aluminium, lithium halide or nickel catalysts. The rubbery materials may have various degrees of crosslinking and various ratios among micro-structures such as cis, trans and vinyl. They may be particles of various average sizes. Further, the copolymers may be random copolymers, block copolymers or graft copolymers. The rubbery materials may also be copolymers with other monomers such as olefines, dienes, aromatic vinyl compounds, acrylic acid, acrylic esters and methacrylic esters. These comonomers may be copolymerized in any manner of random copolymerization, block copolymerization or graft copolymerization. Examples of these monomers are ethylene, propylene, styrene, chlorostyrene, $\alpha$-methylstyrene, butadiene, isobutyrene, chlorobutadiene, butene, isobutylene, acrylic acid, methyl acrylate, ethyl acrylate, butyl acrylate, methyl methacrylate and acrylonitrile. Partially modified rubbery materials may also be used in the invention, such as polybutadiene having hydroxy- or carboxy- modified terminals, partially hydrogenated styrenebutadiene block copolymers, and partially hydrogenated styrene-isoprene block copolymers.

Further, as the rubbery material, there may used styrene type elastomer such as copolymers, e.g. random, block or graft copolymers of vinyl aromatic compounds and conjugated dienes. Examples of these are hydrogenated or non-hydrogenated block copolymers represented by the formula A-B-A or A-B (wherein A is polystyrene and B is elastomeric dienes such as polybutadiene), radialtereblock copolymer of styrene with conjugated dienes, acrylic resin-modified styrenebutadiene resins; and graft copolymers obtained by graft copolymerizing a monomer or monomer mixture containing styrenes as a major component to a rubbery polymer.

Further, to the resin composition according to the invention may be added other resins, additives such as pigments, dyes and reinforcing agents (e.g., glass fiber or carbon fiber), fillers such as carbon black, silica and titanium oxide, heat resisting agents, antioxidants, anti-aging agents, lubricants, releasing agents, nucleating agents, plasticizers, flame retardants, flow-improving agents and anti-statics.

It is preferred to use a melt kneading process in preparing the composition of the invention. It is allowed to use a small amount of solvents, but this is not needed usually. As equipment used, extruders, banbury mixers, rollers and kneaders may be named in particular. These may be operated batchwise or continuously. The order of mixing is not particularly restricted. If a rubbery material is added, it is preferred to melt-knead the rubbery material and PPE in advance to thereby disperse the rubbery material in PPE .

The invention will be further explained with reference to the following Examples which are not intended to limit the invention.

In Examples, unless otherwise stated, part and % are part by weight and percentage by weight, respectively.

Examples 1 to 6

The used components were as follows: Component (A) PPS:

PPS T 4 (Topren Co.) with a melt viscosity of 3,900 poise at 300 °C and a shearing speed of 200 $sec^{-1}$.

Component (B): PPE

Unmodified PPE, poly(2,6-dimethyl-1,4-phenylene)ether with an intrinsic viscosity of 0.46 dl/g (chloroform, 30 °C)

PPE-1, PPE with acid anhydride group at ends, prepared as follows:

(Preparation)

100 Parts by weight of PPE having an intrinsic viscosity of 0.46 (chloroform, 30 °C) were dissolved in 500 parts by weight of toluene in a dried flask. Then, 3 parts by weight of trimellitic anhydride chloride were added, and heated up to 100 °C under stirring. Six parts by weight of dimethyl-n-butylamine were added and allowed to react for 2 hours. After cooling to about room temperature, methanol of double the volume as the toluene added was added to precepitate the polymer, which was filtered, washed sequentially with methanol, water and methanol, and dried at 150 °C in vacuo for 8 hours to obtain PPE having terminal acid anhydride groups.

PPE-2, PPE with epoxy group at ends, prepared as follows:

(Preparation)

100 Parts by weight of PPE having an intrinsic viscosity of 0.46 were dissolved in 1,500 parts by weight of epichlorohydrin in a dried flask. Then, 15 parts by weight of a 33.3% sodium hydroxide solution were added, heated up to 100 °C under stirring and allowed to react for 4 hours. Then, washing and drying were conducted as in the case of PPE-1 to obtain PPE having terminal epoxy groups.

:PA

PA6-A, polyamide-6 having a terminal amino group amount of 8.4 x $10^{-5}$ mole/g, a terminal carboxy group amount of 1.8 x $10^{-5}$ mole/g, and a molecular weight of 13,000.

PA6-B, polyamide-6 having a terminal amino group amount of 4.6 x $10^{-5}$ mole/g, a terminal carboxy group amount of 7.0 x $10^{-5}$ mole/g, and a molecular weight of 13,000.

The components were mixed in the amounts indicated in Table 1 and extruded into pellets through a twin screw extruder (screw diameter 50 mm) set at 300 °C. After dried, the pellets were molded into test pieces using an injection molding machine set at a cylinder temperature of 320 °C, which were evaluated for Izod impact strength (without notch), bending strength, bending modulus, bending reputure energy, HDT and appearance. The obtained results are shown in Table 1.

Examples 7 to 10 and Comparison Examples 5 and 6

Test pieces were prepared in a similar way as mentioned above, except that PPE and PA was pre-extruded and then mixed with PPS. The same tests were conducted. The results are shown in Table 2.

Table 1

| | Example 1 | Example 2 | Example 3 | Example 4 | Example 5 | Example 6 | Comp. Ex. 1 | Comp. Ex. 2 | Comp. Ex. 3 | Comp. Ex. 4 |
|---|---|---|---|---|---|---|---|---|---|---|
| (A) PPS | 50 | 50 | 50 | 50 | 50 | 50 | 50 | 50 | 50 | 50 |
| (B) PPE unmodified | - | - | - | - | - | 10 | - | - | 20 | 20 |
| PPE-1 | 10 | 20 | 30 | 40 | - | 10 | 10 | 20 | - | - |
| PPE-2 | - | - | - | - | 10 | - | - | - | - | - |
| PA6-A | 40 | 30 | 20 | 10 | 40 | 30 | - | - | 30 | - |
| PA6-B | - | - | - | - | - | - | 40 | 30 | - | 30 |
| Izod impact without notch, Kg cm/cm | 67 | 42 | 38 | 42 | 48 | 35 | 32 | 35 | 28 | 27 |
| Bending strength $Kg/cm^2$ | 1100 | 1090 | 850 | 780 | 1000 | 1100 | 920 | 900 | 900 | 900 |
| Bending modulus $x\ 10^3\ Kg/cm^2$ | 31 | 31 | 29 | 30 | 29 | 31 | 27 | 30 | 27 | 27 |
| Bending rupture energy Kg cm | 22 | 29 | 13 | 10 | 20 | 20 | 14 | 13 | 15 | 13 |
| HDT, °C, 4.6 $Kg/cm^2$ load | 175 | 190 | 189 | 200 | 190 | 195 | 186 | 188 | 190 | 188 |
| Appearance | Good | Good | Good | Good | Good | Good | Good | Bad | Bad | Bad |

*NB: The test piece did not break.

Table 2

| | Example 7 | Example 8 | Example 9 | Example 10 | Comp. Ex. 5 | Comp. Ex. 6 |
|---|---|---|---|---|---|---|
| (A) PPS | 20 | 40 | 60 | 80 | 10 | 90 |
| (B) PPE unmodified | - | - | - | - | 36 | 4 |
| PPE-1 | 32 | 24 | 16 | 8 | - | - |
| PPE-2 | - | - | - | - | - | - |
| PA6-A | 48 | 36 | 24 | 12 | 54 | - |
| PA6-B | - | - | - | - | - | 6 |
| Izod impact without notch, Kg cm/cm | 38 | 40 | 48 | 25 | 35 | 17 |
| Bending strength Kg/cm$^2$ | 800 | 1050 | 1200 | 800 | 580 | 700 |
| Bending modulus x $10^3$ Kg/cm$^2$ | 26 | 29 | 31 | 32 | 19 | 32 |
| Bending rupture energy Kg cm | 28 | 29 | 31 | 29 | 15 | 12 |
| HDT, °C, 4.6 Kg/cm$^2$ load | 186 | 188 | 190 | 188 | 155 | 190 |
| Appearance | Good | Good | Good | Good | Good | Good |

The resin compositions which contained PPS, the terminal group-modified PPE and PA having the more amino group than the carboxyl group (Examples 1 to 10) exhibited the comparable or better results in all of the tests, compared to the resin compositions which contained PPS, the terminal group-modified PPE and PA having the less amino group than the carboxyl group (Comparison Examples 1 and 2); PPS, the unmodified PPE and PA having the more amino group than the cabroxyl group (Comparison Examples 3 and 5); and PPS, the unmodified PPE and PA having the less amino group than the cabroxyl group (Comparison Examples 4 and 6).

It should be noted that the resin composition according to the invention do not show any recognizably inferior properties.

## Claims

1. A resin composition comprising a polyphenylene sulfide resin and a polyphenylene ether resin, characterized in that the resin composition contains:
   (A) from 20 to 80 parts by weight of a polyphenylene sulfide resin,
   (B) from 20 to 80 parts by weight of a combination of 10 to 90% by weight of a polyphenylene ether resin which is wholly or partly modified To have at least one terminal group selected from carboxyl, acid anhydride and epoxy groups and 10 to 90% by weight of a polyamide resin.

2. The resin composition according to claim 1, wherein the polyamide has the mole amount of a terminal amino group larger than the mole amount of a terminal carboxyl group.

3. The resin composition according to claim 1 or 2 said (B) consists of 20 to 100% by weight of the polyphenylene ether resin and 0 to 80% by weight of the polystyrene resin.

4. The resin composition according to claims 1 to 3, wherein a rubbery material is further contained.